# EUROPÄISCHE PATENTSCHRIFT

(11) **EP 4 071 317 B1**
(45) Veröffentlichungstag und Bekanntmachung des Hinweises auf die Patenterteilung: **19.03.2025**
(21) Anmeldenummer: 22167191.0
(22) Anmeldetag: 07.04.2022
(51) Int. Cl.: E04F 11/18

(54) **BAUSATZ ZUR BILDUNG EINES GELÄNDERS MIT SOLARPANELS**
KIT FOR FORMING A RAILING WITH SOLAR PANELS
ENSEMBLE DESTINÉ À LA CONSTRUCTION D'UN GARDE-CORPS POURVU DE PANNEAUX SOLAIRES

(30) Priorität: 09.04.2021 CH 3682021
(43) Veröffentlichungstag der Anmeldung: 12.10.2022
(73) Patentinhaber: g-neration.energy AG, 3645 Gwatt (Thun) (CH)
(72) Erfinder: Nyffenegger, Adrian, 4914 Roggwil (CH)
(74) Vertreter: AMMANN PATENTANWÄLTE AG

(56) Entgegenhaltungen:
- EP-A1- 2 017 399
- DE-U1- 20 014 310

## Beschreibung

Die vorliegende Erfindung bezieht sich auf einen Bausatz zur Bildung eines Geländers mit Solarpanels.

Man ist heute bestrebt, Gebäude mit Solarmodulen zur Erzeugung von Strom aus Sonnenenergie zu versehen. Ein Solarmodul, welches ein plattenförmiges Element ist, wird nachfolgend auch als "Solarpanel" bezeichnet.

Nebst der Montage auf dem Dach ist es auch denkbar, die Solarpanels auf einem Balkon anzubringen. Aus der DE 200 14 310 U1 ist es bekannt, ein Geländer vorzusehen, bei welchem ein Teil davon durch die Solarpanels gebildet wird. Es ist keine Auflage für das jeweilige Solarpanel vorgesehen, sodass die untere Kantenfläche des jeweiligen Solarpanels nicht abgestützt ist. Die Solarpanels sind schwenkbar angebracht und sind demnach fest mit den beweglichen Elementen verbunden. Dies erschwert die Montage eines Solarpanels wie auch eine etwaige Auswechslung. DE 200 14 310 U1 offenbart einen Bausatz gemäß der Präambel des Anspruchs 1.

Eine Aufgabe der vorliegenden Erfindung ist es, einen Bausatz zur Bildung eines Geländers mit Solarpanels zu schaffen, bei welchem die Montage eines Solarpanels erleichtert ist.

Ein Bausatz, der diese Aufgabe löst, ist im Anspruch 1 angegeben. Die weiteren Ansprüche geben bevorzugte Ausführungen sowie ein Geländer und eine Photovoltaikanlage an.

Gemäss Anspruch 1 umfasst der Bausatz mindestens ein Basisprofil als Auflage für mindestens ein Solarpanel, mindestens ein Haltemittel, z.B. ein Oberprofil, sowie mindestens einen Pfosten mit einer daran befestigten Halteplatte, an welcher das mindestens eine Basisprofil befestigbar ist.

Der Bausatz ermöglicht das Anbringen des Solarpanels, ohne dass dieses notwendigerweise festgeschraubt oder -geklebt zu werden braucht, was die Montage erleichtert.

Das mindestens eine Basisprofil ist so ausgestaltet, dass es als Auflage für die untere Kantenfläche des mindestens einen Solarpanels dient. Dadurch kann das mindestens eine Solarpanel z.B. in einer im Wesentlichen vertikalen Lage angeordnet werden. Der Bereich des mindestens einen Solarpanels zwischen dem oberen und unteren Randbereich kann freiliegend sein und braucht nicht unbedingt abgestützt zu sein. Die Auflage kann so ausgestaltet sein, dass das mindestens eine Solarpanel nicht über die gesamte Länge der unteren Kantenfläche abgestützt ist, sondern nur in einem oder mehreren Teilbereichen, z.B. jeweils an beiden Endbereichen.

Das mindestens eine Basisprofil kann ein- oder mehrteilig ausgebildet sein.

Beispielsweise kann das mindestens eine Basisprofil integral mit der Auflage ausgebildet sein oder das mindestens eine Basisprofil kann ein Grundprofil und mindestens ein separat davon ausgebildetes Auflageelement umfassen, welches als Auflage für das Solarpanel dient und welches mit dem Grundprofil verbunden ist, z.B. mittels lösbarer Verbindung.

Die Halteplatte kann an dem mindestens einen Pfosten unlösbar, z.B. mittels Stoffschluss, oder lösbar, z.B. mittels Schraubenverbindung, befestigt sein.

Das mindestens eine Basisprofil ist an der Halteplatte befestigbar, z.B. direkt oder indirekt. Beispielsweise weist das mindestens eine Basisprofil eine Seitenwand auf, welche an der Halteplatte befestigbar ist, und/oder einen Boden, welcher an der Halteplatte befestigbar ist beispielsweise über ein an der Halteplatte angebrachtes Konsolenelement.

Die Montage ist besonders erleichtert durch Vorsehen mindestens eines Abdeckprofils, welches lösbar mit dem mindestens einen Basisprofil verbindbar ist, so dass das mindestens eine Solarpanel zwischen Abdeck- und Basisprofil angeordnet ist. Vorteilhafterweise bilden Abdeck- und Basisprofil einen Kabelkanal. Dadurch kann eine verdeckt liegende Kabelführung bereitgestellt werden.

Es sind mindestens zwei Abdeckprofile vorgesehen, welche so an das mindestens eine Basisprofil anbringbar sind, dass die Halteplatte des Pfostens dazwischen angeordnet ist. Vorteilhafterweise kann ein Abdeckprofil an den vorgegebenen Abstand zwischen zwei Pfosten so abgelängt werden, dass es jeweils an den Halteplatten der Pfosten anliegt. Die Halteplatten sowie Basis- und Abdeckprofile bilden dann einen durchgehenden Kanal.

Als weitere Ausführungsbeispiele kann der Bausatz eines oder mehrere der folgenden Merkmale aufweisen:
- An der Halteplatte ist ein Konsolenelement befestigt, an welchem vorzugsweise ein hinterschnittenes Befestigungselement angebracht ist zur Verbindung mit dem Basisprofil und/oder welches vorzugsweise L-förmig ausgebildet ist.
- Das Basisprofil umfasst eine Wand (z.B. eine hintere seitliche Wand oder einen Boden), welche eine Befestigungsnut zur Befestigung an der Halteplatte aufweist. Vorzugsweise ist die Befestigungsnut an der Innenseite der Wand angeordnet.
- Das Basisprofil weist eine hintere seitliche Wand auf, wobei das Basisprofil so an der Halteplatte befestigbar ist, dass diese die hintere seitliche Wand überragt.

Die Erfindung wird im Folgenden anhand von Ausführungsbeispielen unter Bezugnahme auf Figuren erläutert. Es zeigen
- Fig. 1: eine teilweise geschnittene Seitenansicht eines Geländers, welches mittels eines Bausatzes gemäss einem ersten Ausführungsbeispiel gebildet ist, wobei hier das Abdeckprofil nicht angebracht ist, so dass das Halteteil von der Seite zu sehen ist,
- Fig. 2: die Seitenansicht gemäss Fig. 1, wobei das Abdeckprofil angebracht ist, so dass dieses von der Seite zu sehen ist,
- Fig. 3: eine Vorderansicht eines Pfostens des Bausatzes gemäss dem ersten Ausführungsbeispiel,
- Fig. 4: eine Explosionsansicht des unteren Teils des Geländers gemäss Fig. 1 ohne Solarpanel,
- Fig. 5: eine perspektivische Ansicht des unteren Teils des Geländers gemäss Fig. 1 ohne Solarpanel,
- Fig. 6: eine teilweise geschnittene Seitenansicht eines Geländers, welches mittels eines Bausatzes gemäss einem zweiten Ausführungsbeispiel gebildet ist, wobei hier das Abdeckprofil nicht angebracht ist, so dass das Halteteil von der Seite zu sehen ist,
- Fig. 7: die Seitenansicht gemäss Fig. 6, wobei das Abdeckprofil angebracht ist, so dass dieses von der Seite zu sehen ist.
- Fig. 8: eine teilweise geschnittene Seitenansicht eines Geländers, welches mittels eines Bausatzes gemäss einem dritten Ausführungsbeispiel gebildet ist,
- Fig. 9: eine Vorderansicht eines Pfostens des Bausatzes gemäss dem dritten Ausführungsbeispiel,
- Fig. 10: eine Explosionsansicht des unteren Teils des Geländers gemäss Fig. 8 ohne Solarpanel, und
- Fig. 11: eine perspektivische Ansicht des unteren Teils des Geländers gemäss Fig. 8 ohne Solarpanel.

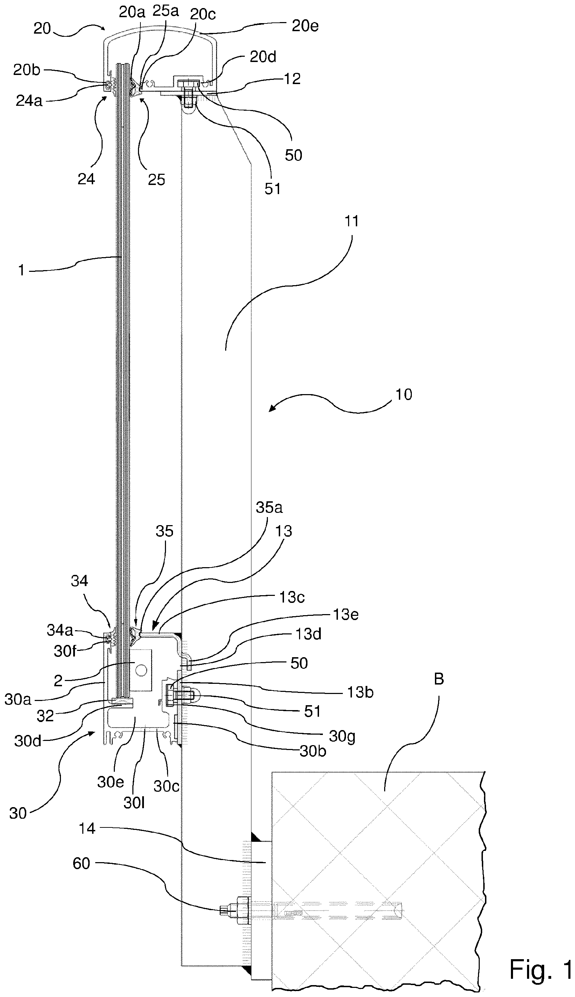

Fig. 1 zeigt ein erstes Ausführungsbeispiel eines Bausatzes, mit welchem ein Geländer mit Solarpanels 1 gebildet wurde. Hier sind u.a. ein Pfosten 10, ein Oberprofil 20 und ein Basisprofil 30 zu sehen.

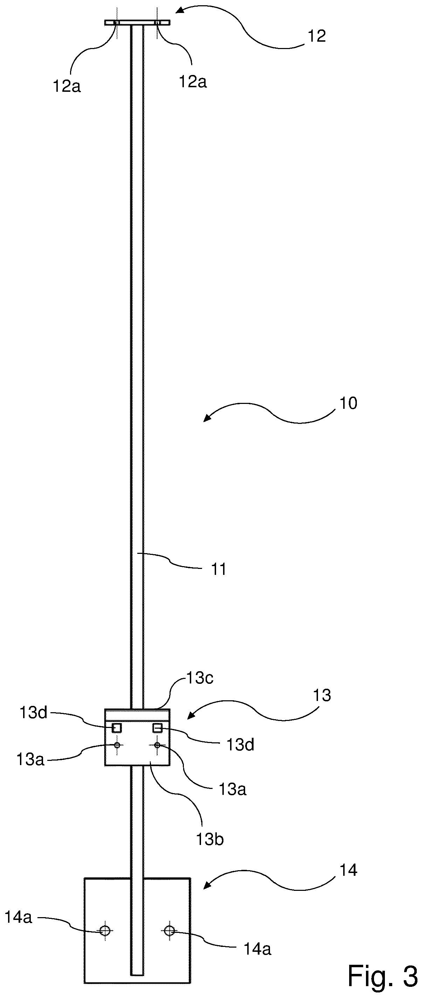

Wie auch Fig. 3 zeigt, weist der Pfosten 10 ein Längsteil 11 auf, an welchem folgende Teile 12-14 befestigt sind:
- am oberen Ende des Längsteils 11 ein Befestigungsteil 12, an welchem das Oberprofil 20 befestigbar ist,
- im unteren Bereich des Längsteils 11 ein Halteteil 13, an welchem das Basisprofil 30 befestigbar ist, und
- am unteren Ende des Längsteils 11 ein Montageteil 14 zum Montieren des Pfostens 10 z.B. am Balkon B.

Das Längsteil 11 ist hier als flaches Langelement ausgebildet, welches z.B. einen rechteckigen Querschnitt aufweist.

Das Befestigungsteil 12 ist hier als Platte ausgebildet, deren Unterseite an der Oberseite des Längsteils 11 befestigt ist und die Durchgangslöcher 12a aufweist, durch welche hindurch jeweils ein Ende einer Befestigungsschraube 50 führbar ist.

Die Halteplatte 13b ist mit Durchgangslöchern 13a versehen, hier mit zwei, durch welche hindurch jeweils ein Ende einer Befestigungsschraube 50 führbar ist.

Das Halteteil 13 umfasst eine Halteplatte 13b, deren Rückseite an der Vorderseite des Längsteils 11 befestigt ist, welche hier eine Schmalseite des Längsteils 11 ist, so dass die Halteplatte 13b beidseitig des Längsteils 11 hinausragt.

Das Halteteil 13 ist oben abgewinkelt, so dass eine Deckplatte 13c gegeben ist, welche zusammen mit der Halteplatte 13b ein abgewinkeltes Profil, z.B. L-förmiges Profil, bildet.

Das Montageteil 14 ist als Platte ausgebildet, die hier an der Rückseite des Längsteils 11 befestigt ist und die Durchgangslöcher 14a aufweist, durch welche hindurch jeweils ein Ende einer Befestigungsschraube 60 führbar ist, um den Pfosten 10 zu fixieren. Je nach Art der Montage ist das Montagteil 14 auch anders ausgestaltet. Beispielsweise kann das Montagteil 14 am unteren Ende des Längsteils 11 befestigt sind, um so den Pfosten 10 nicht an der Vorderseite, sondern auf dem Boden eines Balkons B montieren zu können.

Die Teile 11-14 sind aus einem witterungsbeständigen Material, vorzugsweise aus Metall, z.B. Stahl, insbesondere feuerverzinkter oder Edelstahl, gefertigt und können jeweils einstückig hergestellt sein. Die Teile 11-14 haben hier einen rechteckigen Querschnitt und sind z.B. so aus Flachstahl fertigbar. Das Längsteil 11 kann auch röhrenförmig sein und eine Aussenseite aufweisen, die z.B. rechteckig, insbesondere quadratisch, ist. Das jeweilige Teil 12-14 ist am Längsteil 11 unlösbar verbunden, z.B. durch Schweissen.

Wie Fig. 1 weiter zeigt, weist das Oberprofil 20 einen Längsschlitz 20a auf, so dass ein halb-geschlossenes Profil gegeben ist. Der obere Randbereich des Solarpanels 1 ist in den Längsschlitz 20a hineingefügt, so dass es in das Innere des Oberprofils 20 hineinragt.

Der Längsschlitz 20a ist mit zwei Dichtleisten 24, 25 versehen, zwischen welchen das Solarpanel 1 angeordnet ist. Die Dichtleisten 24, 25 sind hier profiliert und z.B. mittels Steckverbindung mit dem Oberprofil 20 verbunden, indem beispielsweise die zu verbindenden Komponenten mit einer Nut bzw. einem vorspringenden Bereich zum Eingriff in die Nut versehen sind. Hier weist das Oberprofil 20 auf der einen Seite des Längsschlitzes 20a eine Längsnut 20b auf, in welche ein vorspringender Seitenbereich 24a der ersten Dichtleiste 24 eingefügt ist, während die gegenüberliegende Seite 20c des Längsschlitzes 20a in eine Längsnut 25a in der zweiten Dichtleiste 25 eingefügt ist.

Das Oberprofil 20 umfasst weiter an seiner Unterseite eine Befestigungsnut 20d, in welche eine Befestigungsschraube 50 einfügbar ist. Die Befestigungsnut 20d weist einen T-förmigen Querschnitt auf, so dass Hinterschneidungen gegeben sind, welche den Kopf der Befestigungsschraube 50 festhalten. Diese ist so gewählt, dass der Kopf ein unrunde Form, z.B. eine im Wesentlichen rechteckige Form, aufweist und somit verdrehgesichert in der Befestigungsnut 20d gehalten ist, wenn das Schraubenende der Befestigungsschraube 50 durch ein Durchgangsloch 12a im Halteteil 12 hindurchgeführt und mittels einer Mutter 51 festgezogen wird. Die Befestigungsschraube 50 ist z.B. als Hammerkopfschraube ausgebildet, die sich an der gewünschten Position in die Befestigungsnut 20d einfügen und durch Anbringen der Mutter 51 festschrauben lässt. Beim Festziehen dreht der Kopf der Hammerkopfschraube anfangs derart, dass er sich quer zur Befestigungsnut 20d ausrichtet und dann an deren Wänden anschlägt, so dass er nicht mehr weiter gedreht werden kann.

Die Oberseite 20e des Oberprofils 20 dient hier als Handlauf und ist z.B. gewölbt ausgebildet. Es auch denkbar, einen separaten Handlauf vorzusehen, welcher an der Oberseite 20e befestigt wird.

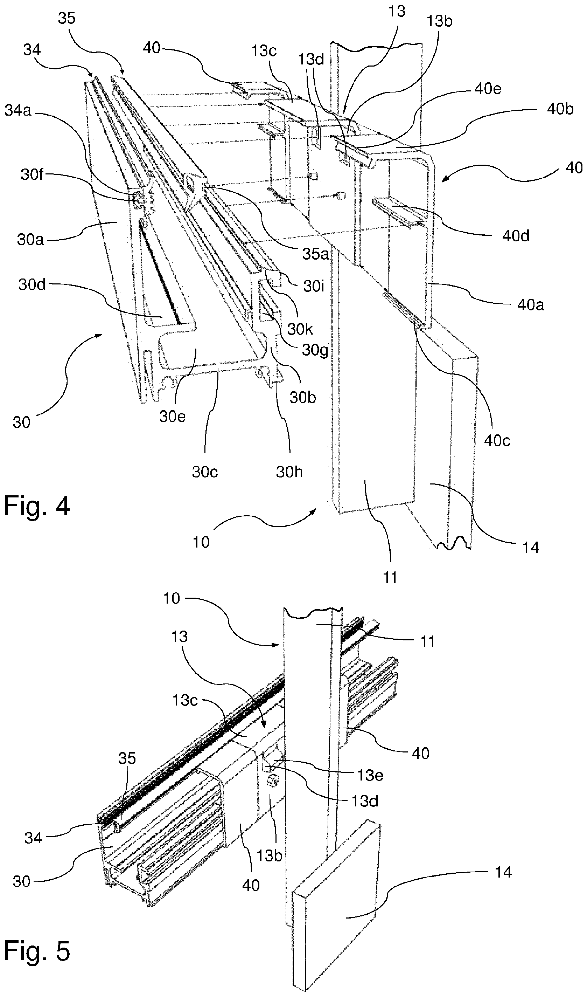

Wie auch Fig. 4 zeigt, ist das Basisprofil 30 oben offen ausgebildet, so dass zwei gegenüberliegende Seitenwände 30a, 30b gebildet sind, die über einen Boden 30c verbunden sind. Von der Seite gesehen reicht die vordere Seitenwand 30a zu einem höheren Niveau als die hintere Seitenwand 30b.

An der Innenseite der vorderen Seitenwand 30a ist eine Auflageleiste 30d angebracht, welche in das Innere des Basisprofils 30 hineinragt und als Auflage für das Solarpanel 1 dient. Zwischen der Auflageleiste 30d und dem Solarpanel 1 ist ein Schutzpolster 32 angeordnet (vgl. Fig. 1). Dieses schützt das Solarpanel 1 vor Beschädigungen und ist aus einem weichen Material, z.B. Kunststoff, gefertigt.

Die Auflageleiste 30d endet vor der hinteren Seitenwand 30b, so dass ein Durchgang in den unteren Bereich 30e des Basisprofils 30 gegeben ist, welcher als Kabelkanal dient. So ist in Fig. 1 eine Anschlussdose 2 zum Anschluss eines Kabels (nicht dargestellt) angedeutet, welches dann über den Kabelkanal 30e zu mindestens einem anderen Solarpanel 1, einem Leistungsoptimierer und/oder dem Wechselrichter führt.

Fig. 1 und 4 zeigen weiter untere Dichtleisten 34, 35, welche im unteren Bereich des Solarpanels 1 anliegen und welche z.B. gleich oder ähnlich wie die oberen Dichtleisten 24, 25 ausgebildet sind.

Die unteren Dichtleisten 34, 35 sind z.B. so wie die oberen Dichtleisten 24, 25 mittels Steckverbindung verbindbar, indem beispielsweise die zu verbindenden Komponenten mit einer Nut bzw. einem vorspringenden Bereich zum Eingriff in die Nut versehen sind. Hier weist die vordere Dichtleiste 34 einen vorspringenden Seitenbereich 34a auf, der in einer Längsnut 30f im Basisprofil 30 eingefügt ist, und die hintere Dichtleiste 35 weist eine Längsnut 35a zur Aufnahme des Gegenstücks auf, welches, wie weiter unten erläutert, das Halteteil 13 bzw. ein Abdeckprofil 40 ist.

Die Dichtleisten 24, 25 und 34, 35 verhindern u.a. ein Eindringen von Wasser und Schmutz in das Innere des Ober- bzw. Basisprofils 20, 30 und schützen das Solarpanel 1 vor Beschädigungen. Die Dichtleisten 24, 25, 34, 35 sind aus einem flexiblen Material, z.B. aus einem Elastomer, wie Kautschuk, gefertigt.

Die hintere Seitenwand 30b des Basisprofils 30 weist eine Befestigungsnut 30g auf, welche ähnlich ausgebildet sein kann wie die Befestigungsnut 20d im Oberprofil 20 und demnach z.B. einen T-förmigen Querschnitt aufweist, so dass eine Befestigungsschraube 50, z.B. Hammerkopfschraube, in die Befestigungsnut 30g einfügbar und an der Halteplatte 13b mittels einer Mutter 51 befestigbar ist.

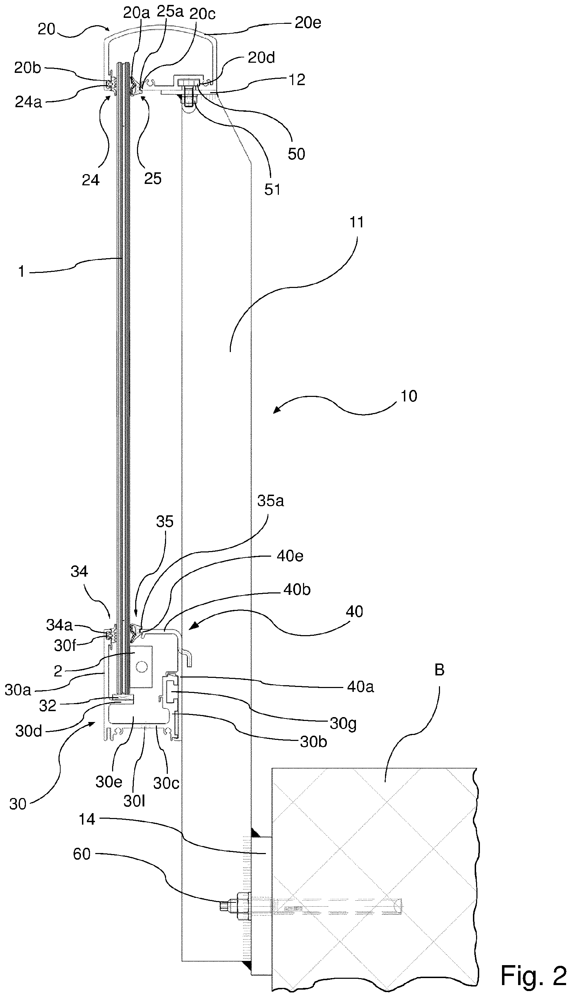

Der obere und untere Randbereich 30i bzw. 30h der hinteren Seitenwand 30b ist jeweils derart ausgestaltet, dass er mit einem Abdeckprofil 40 lösbar verbindbar ist, vgl. Fig. 2 und 4. Hier ist dies mittels einer Schnappverbindung realisiert. Zu diesem Zweck weist die hintere Seitenwand 30b einen unteren und einen oberen Randbereich 30h bzw. 30i auf, der jeweils ein hinterschnittenes Profil umfasst. Der untere Randbereich 30h ist als Eingriffsnut ausgebildet. Der obere Randbereich 30i weist im Profil gesehen eine Stufe 30k auf, die beim vorliegenden Ausführungsbeispiel abgeschrägt ausgebildet ist.

Das Abdeckprofil 40 weist eine Seitenwand 40a und ein quer dazu angeordnetes Deckteil 40b auf. Im unteren Randbereich weist die Seitenwand 40a eine Eingriffsleiste 40c auf, welche ein hinterschnittenes Profil aufweist. Im Bereich zwischen der Eingriffsleiste 40c und dem Deckteil 40b ist eine Federleiste 40d angeordnet, welche eine Nut umfasst und somit ein hinterschnittenes Profil aufweist. Die Federleiste 40d ist federnd ausgebildet, so dass sie beim Hinwegbewegen über die Stufe 30k nach oben ausweichen kann.

Zum Verbinden des Abdeckprofils 40 mit dem Basisprofil 30 wird bei geneigter Stellung des Abdeckprofils 40 der stirnseitige Randbereich 40e des Deckteils 40b in die Nut 35a in der hinteren Dichtleiste 35 eingefügt und dann das Abdeckprofil 40 in Richtung zum Basisprofil 30 hin gekippt, so dass sich die Federleiste 40d über die Stufe 30k hinwegbewegt und dann dahinter einschnappt und die Eingriffsleiste 40c in die Eingriffsnut 30h eingefügt ist.

Der stirnseitige Randbereich 40e des Deckteils 40b und der stirnseitige Randbereich der Deckplatte 13c des Halteteils 13 greifen dann in die Nut 35a, womit die hintere Dichtleiste 35 beabstandet zur vorderen Dichtleiste 34 gehalten ist, vgl. Fig. 5. Wie diese Figur auch zeigt, ist jeweils beidseitig des Halteteils 13 bündig ein Abdeckprofil 40 anbringbar.

Die Verbindung zwischen Abdeckprofil 40 und Basisprofil 30 ist derart, dass das Solarpanel 1 sicher dazwischen gehalten ist, wenn eine Kraft, z.B. verursacht durch Wind, insbesondere auch von aussen, auf das Solarpanel 1 und somit auf das Abdeckprofil 40 wirkt.

Die Profile 20, 30, 40 sind aus einem witterungsbeständigen Material, vorzugsweise aus Metall, z.B. Aluminium oder einer Aluminium-Legierung, gefertigt.

Die Form eines jeweiligen Profils 20, 30, 40 ist in Längsrichtung gleich, sodass sich dieses einstückig z.B. durch Strangpressen herstellen lässt.

In den Fig. 1 und 3-5 sind als Option Durchbrüche 13d im Halteteil 13 eingezeichnet, hier zwei. Es können auch weniger oder mehr sein. Die Durchbrüche 13d sind hier jeweils so gefertigt, dass eine Lasche 13e aus der Halteplatte 13b herausgestanzt und gebogen wird. Die gebogene Lasche 13e deckt somit den Durchbruch 13d teilweise ab. Dadurch ist ein Eindringen von Wasser erschwert. In einer einfachen Ausführungsform kann die Lasche 13e auch weggelassen sein. Alternativ zur Lasche oder ergänzend dazu kann eine Abdeckkappe vorgesehen sein, die einen Durchbruch 13d teilweise so abdeckt, dass ein Eindringen von Wasser erschwert ist.

Durch den jeweiligen Durchbruch 13d kann Luft strömen, um etwaige Hitze abzuführen, welche im Innenraum entsteht, der vom Halteteil 13 sowie vom Basis- und Abdeckprofil 30, 40 umschlossen wird. Der jeweilige Durchbruch 13d dient sozusagen als "Kieme".

Um diesen Luftstrom zu fördern, sind vorzugsweise im Basisprofil 30, z.B. im Boden 30c, ebenfalls Durchgangsöffnungen 30l vorgesehen.

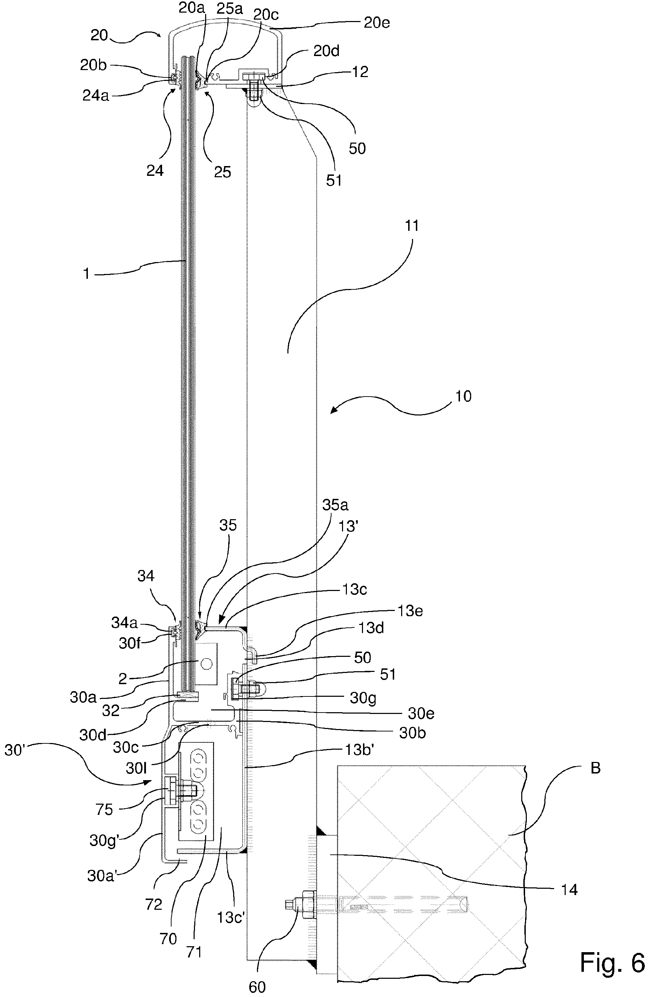

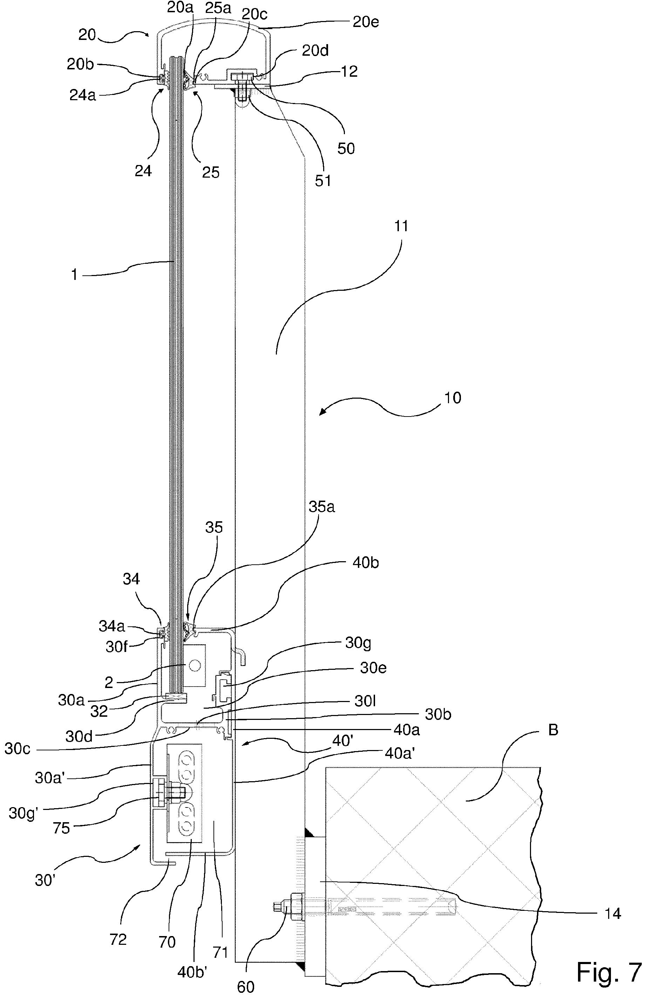

Fig. 6 und 7 zeigen als zweites Ausführungsbeispiel eine Variante, bei welcher zusätzliche elektronische und/oder elektrische Komponenten verdeckt angebracht werden können, z.B. wie hier gezeigt ein Leistungsoptimierer 70 ("power optimizer") für das Solarpanel 1 sowie die dazu erforderliche Verkabelung (nicht dargestellt). Ein jeweiliger Leistungsoptimierer 70 optimiert die Ausgangsleistung eines einzelnen Solarpanels 1 und sorgt für eine feste Strangspannung.

Wie in den Fig. 6 und 7 ersichtlich, sind das Halteteil 13', das Basisprofil 30' sowie das Abdeckprofil 40' gegenüber der Variante gemäss Fig. 1 und 2 nach unten hin erweitert ausgebildet, so dass sich ein weiterer Kanal 71 ergibt. Zu diesem Zweck sind hier folgende Ausgestaltungen vorgesehen:
- Die Halteplatte 13b' des Halteteils 13' ist gegenüber der Halteplatte 13b des ersten Ausführungsbeispiels vergrössert und unten abgewinkelt ausgebildet, so dass eine Bodenplatte 13c' gegeben ist, welche quer zur Halteplatte 13b' angeordnet ist.
- An die vordere Seitenwand 30a des Basisprofils 30' grenzt unten eine weitere Seitenwand 30a' an, welche unten abgewinkelt ist.
- An die Seitenwand 40a des Abdeckprofils 40' grenzt unten eine weitere Seitenwand 40a' an, welche unten abgewinkelt ist, so dass ein Bodenteil 40b' gegeben ist, welche quer zur Seitenwand 40a' angeordnet ist.

Das abgewinkelte Ende der Seitenwand 30a' ist überlappend zur Bodenplatte 13c' und zum Bodenteil 40b', jedoch beabstandet dazu angeordnet, so dass ein Spalt 72 gegeben ist. Dieser bildet zusammen mit den Öffnungen 30l im Boden 30c sowie den Durchbrüchen 13d im Halteteil 13' einen Durchgang, durch welchen hindurch Luft strömen kann, um etwaige Hitze abzuführen, welche im Kanal 71 entsteht.

Die Innenseite der Seitenwand 30a' weist eine Befestigungsnut 30g' auf, welche einen T-förmigen Querschnitt aufweisen kann, so dass eine Befestigungsschraube 75, z.B. Hammerkopfschraube, in die Befestigungsnut 30g einfügbar und zum Halten des Leistungsoptimierers 70 mit einer Mutter verbindbar ist. Ist dieser montiert, so wird er über die Öffnung 30l mit der Anschlussdose 2 verkabelt sowie über den Kanal 30e und/oder dem Kanal 71 mit den benachbarten Leistungsoptimierern 70 bzw. dem Wechselrichter der Photovoltaikanlage.

Das Halteteil 13' und die Profile 30', 40' sind aus demselben Materialen fertigbar wie oben beim ersten Ausführungsbeispiel erläutert und können jeweils einstückig ausgebildet sein.

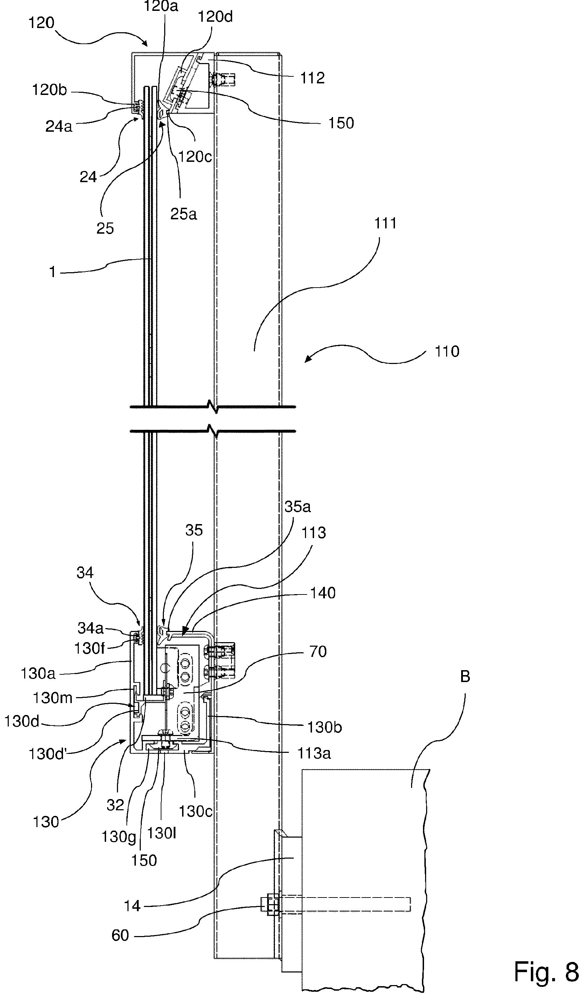

Fig. 8-11 zeigen ein drittes Ausführungsbeispiel. Teile, welche gleich sind wie bei den anderen Ausführungsbeispielen, sind hier mit den gleichen Bezugszeichen versehen. Hier ist eine Variante gezeigt, bei welcher zusätzliche elektronische und/oder elektrische Komponenten verdeckt angebracht werden können, z.B. wie hier gezeigt ein Leistungsoptimierer 70 ("power optimizer") für das Solarpanel 1 sowie die dazu erforderliche Verkabelung (nicht dargestellt). Im Gegensatz zur zweiten Variante gemäss Fig. 6 und 7 kann der Leistungsoptimierer 70 so montiert werden, dass er nicht unterhalb zum Solarpanel 1, sondern seitlich versetzt zu diesem angeordnet ist. Damit ergibt sich eine besonders kompakte Anordnung.

Das hier gezeigte Geländer ist gebildet aus einem Bausatz umfassend u.a. einen Pfosten 110, ein Oberprofil 120 und ein Basisprofil 130.

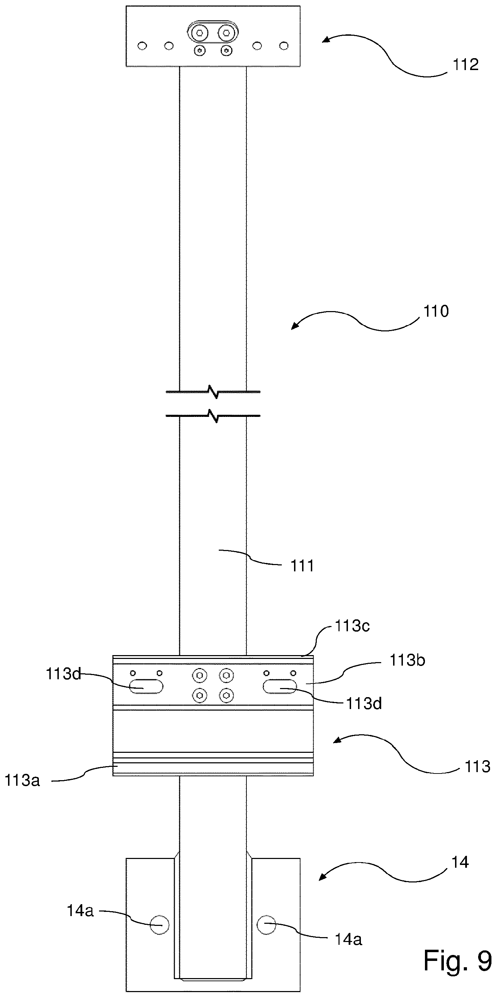

Wie auch Fig. 9 zeigt, weist der Pfosten 110 ein Längsteil 111 auf, an welchem folgende Teile 14, 112, 113 befestigt sind:
- am oberen Ende des Längsteils 111 ein Befestigungsteil 112, an welchem das Oberprofil 120 befestigbar ist,
- im unteren Bereich des Längsteils 111 ein Halteteil 113, an welchem das Basisprofil 130 befestigbar ist, und
- am unteren Ende des Längsteils 111 das Montageteil 14 zum Montieren des Pfostens 110 z.B. am Balkon B.

Das Längsteil 111 ist hier als Rohr ausgebildet, welches z.B. einen rechteckigen Querschnitt aufweist.

Das Befestigungsteil 112 ist hier als Profil ausgebildet, welches am Längsteil 111 befestigt ist z.B. mittels Schrauben und an welchem ein hinterschnittenes Befestigungselement 150 festgeschraubt werden kann.

Das Halteteil 113 umfasst eine Halteplatte 113b, deren Rückseite an der Vorderseite des Längsteils 111 befestigt ist, hier durch eine lösbare Verbindung, z.B. mittels Schrauben. Die Halteplatte 113b ragt beidseitig des Längsteils 111 hinaus.

Das Halteteil 113 ist oben abgewinkelt, so dass eine Deckplatte 113c gegeben ist. Weiters ist an der Innenseite der Halteplatte 113b ein Konsolenelement 113a befestigt, welches beabstandet zur Halteplatte 113b verläuft und L-förmig ausgebildet ist. Am Konsolenelement 113a ist ein hinterschnittenes Befestigungselement 150 befestigt z.B. mittels Schrauben. Zwischen Halteplatte 113b und Konsolenelement 113a ist ein Zwischenraum gegeben, durch welchen die hintere Seitenwand 130b des Basisprofils 130 hindurchragen kann.

Die Teile 14, 111-113 sind aus einem witterungsbeständigen Material, vorzugsweise aus Metall, z.B. Stahl oder Aluminium, gefertigt und können jeweils ein- oder mehrstückig hergestellt sein. Das Halteteil 113 ist z.B. als Gussteil fertigbar. Das jeweilige Teil 112, 113 ist hier am Längsteil 111 lösbar befestigt, während das Teil 14 unlösbar verbunden ist, z.B. durch Schweissen.

Wie Fig. 8 weiter zeigt, weist das Oberprofil 120 einen Längsschlitz 120a auf, so dass ein halb-geschlossenes Profil gegeben ist. Der obere Randbereich des Solarpanels 1 ist in den Längsschlitz 120a hineingefügt, so dass es in das Innere des Oberprofils 120 hineinragt.

Der Längsschlitz 120a ist mit zwei Dichtleisten 24, 25 versehen, zwischen welchen das Solarpanel 1 angeordnet ist. Hier weist das Oberprofil 120 auf der einen Seite des Längsschlitzes 120a eine Längsnut 120b auf, in welche ein vorspringender Seitenbereich 24a der ersten Dichtleiste 24 eingefügt ist, während die gegenüberliegende Seite 120c des Längsschlitzes 120a in eine Längsnut 25a in der zweiten Dichtleiste 25 eingefügt ist.

Das Oberprofil 120 umfasst weiter an seiner Innenseite eine Befestigungsnut 120d, in welche das Befestigungselement 150 einfügbar ist.

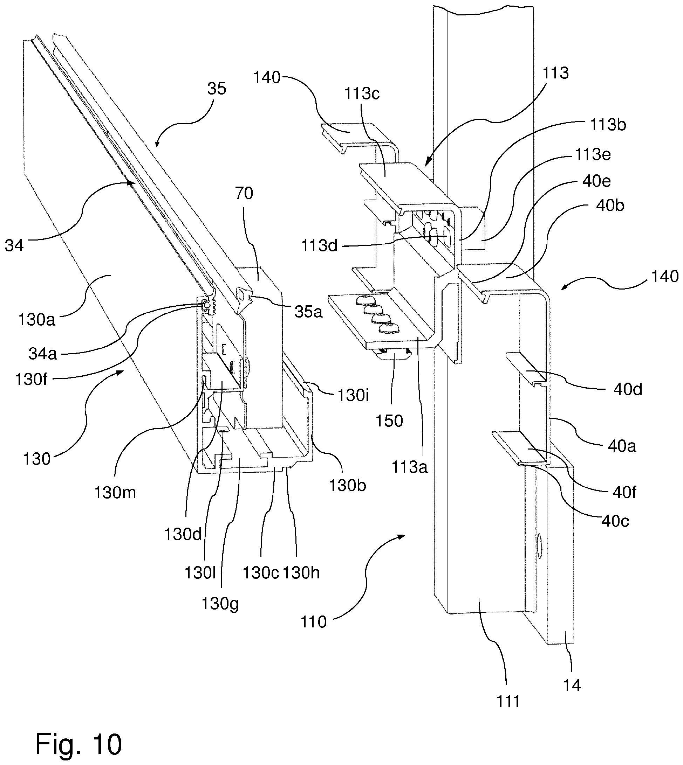

Wie auch Fig. 10 zeigt, ist das Basisprofil 130 oben offen ausgebildet, so dass zwei gegenüberliegende Seitenwände 130a, 130b gebildet sind, die über einen Boden 130c verbunden sind. Von der Seite gesehen reicht die vordere Seitenwand 130a zu einem höheren Niveau als die hintere Seitenwand 130b.

An der Innenseite der vorderen Seitenwand 130a ist eine Aufnahmenut 130m vorgesehen, in welche mindestens ein Auflageelement 130d angebracht ist, welche in das Innere des Basisprofils 130 hineinragt und als Auflage für die untere Kantenfläche des Solarpanels 1 dient. Die untere Kantenfläche ist der untere Bereich des Solarpanels zwischen der Vorder- und Rückseite. Zwischen dem Auflageelement 130d und dem Solarpanel 1 ist ein Schutzpolster 32 angeordnet (vgl. Fig. 8). Dieses schützt das Solarpanel 1 vor Beschädigungen und ist aus einem weichen Material, z.B. Kunststoff, gefertigt.

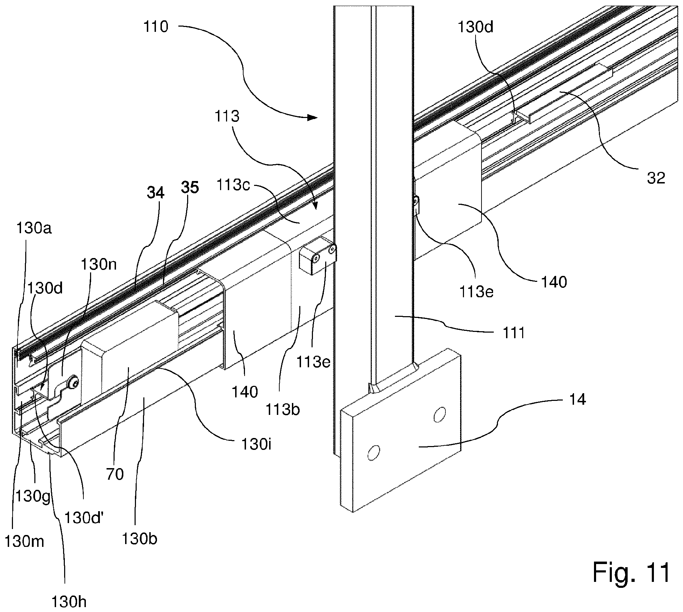

Das Auflageelement 130d weist eine Auflageleiste mit einer seitlich dazu angebrachten Auskragung 130d' auf. Diese sowie die Aufnahmenut 130m sind so geformt, dass zuerst der obere Teil der Auskragung 130d' und danach dessen unterer Teil seitlich in die Aufnahmenut 130m eingefügt werden kann und dann das ganze Auflageelement 130d nach unten gesenkt wird, so dass die Auskragung 130d' in der Aufnahmenut 130m verhakt ist. Wie Fig. 11 zeigt, können mehrere Auflageelemente 130d vorgesehen sein, z.B. zwei pro Solarpanel 1, auf welche sich dieses in seinem jeweiligen Randbereich abstützen kann.

Das Auflageelement 130d endet vor der hinteren Seitenwand 130b, so dass ein Durchgang in den unteren Bereich des Basisprofils 130 gegeben ist. Am Auflageelement 130d ist seitlich eine elektronische und/oder elektrische Komponenten befestigbar. Wie insbesondere Fig. 11 zeigt, ist hier ein Leistungsoptimierer 70 mittels z.B. einer Platte 130n am Auflageelement 130d befestigt. Dieser ist somit zwischen Auflageelement 130d und hinterer Seitenwand 130b des Basisprofils 130 angeordnet.

Fig. 8, 10 und 11 zeigen weiter untere Dichtleisten 34, 35, welche im unteren Bereich des Solarpanels 1 anliegen und welche so ausgebildet sein können wie beim ersten und zweiten Ausführungsbeispiel. Die vordere Dichtleiste 34 ist über ihren vorspringenden Seitenbereich 34a in einer Längsnut 130f im Basisprofil 130 eingefügt, und die Längsnut 35a in der hinteren Dichtleiste 35 dient zur Aufnahme des Gegenstücks, welches das Halteteil 113 bzw. Abdeckprofil 140 ist.

Der Boden 130c des Basisprofils 130 weist eine Befestigungsnut 130g auf, welche ähnlich ausgebildet sein kann wie die Befestigungsnut 120d im Oberprofil 120 und demnach z.B. einen T-förmigen Querschnitt aufweist, so dass ein am Halteteil 113 befestigtes Befestigungselement 150 in die Befestigungsnut 130g einfügbar ist.

Der obere Randbereich 130i der hinteren Seitenwand 130b und der untere Randbereich 130h des Bodens 130c sind jeweils derart ausgestaltet, dass sie mit einem Abdeckprofil 140 lösbar verbindbar sind, vgl. Fig. 10 und 11. Hier ist dies wie bei den ersten beiden Ausführungsbeispielen mittels einer Schnappverbindung realisiert. Analog zu diesen Ausführungsbeispielen weisen der untere und obere Randbereich 130h bzw. 130i eine Eingriffsnut bzw. ein Profil mit einer Stufe auf.

Das Abdeckprofil 140 weist wie beim ersten Ausführungsbeispiel eine Seitenwand 40a, ein Deckteil 40b mit dem Randbereich 40e, eine Eingriffsleiste 40c und eine Federleiste 40d auf. Im Gegensatz zu diesem ersten Beispiel ist die Eingriffsleiste 40d nicht direkt am Ende der Seitenwand 40a, sondern am Ende an einer von der Seitenwand 40a abgehenden Bodenwand 40f angeordnet.

Analog zu den beiden ersten Ausführungsbeispielen wird das Abdeckprofil 140 mit dem Basisprofil 130 so verbunden, dass der stirnseitige Randbereich 40e des Deckteils 40b in die Nut 35a in der hinteren Dichtleiste 35 eingefügt, die Federleiste 40d hinter dem oberen Randbereich 130i eingeschnappt und die Eingriffsleiste 40c in die Eingriffsnut 130h eingefügt ist. Der stirnseitige Randbereich 40e des Deckteils 40b und der stirnseitige Randbereich der Deckplatte 113c des Halteteils 113 greifen dann in die Nut 35a, womit die hintere Dichtleiste 35 beabstandet zur vorderen Dichtleiste 34 gehalten ist, vgl. Fig. 11. Wie diese Figur auch zeigt, ist jeweils beidseitig des Halteteils 113 bündig ein Abdeckprofil 140 anbringbar.

Die Verbindung zwischen Abdeckprofil 140 und Basisprofil 130 ist derart, dass das Solarpanel 1 sicher dazwischen gehalten ist, wenn eine Kraft, z.B. verursacht durch Wind, insbesondere auch von aussen, auf das Solarpanel 1 und somit auf das Abdeckprofil 140 wirkt.

Die Profile 120, 130, 140 sind aus einem witterungsbeständigen Material, vorzugsweise aus Metall, z.B. Aluminium oder einer Aluminium-Legierung, gefertigt. Das Profil 130 ist hier mehrteilig ausgebildet umfassend ein Grundprofil mit den Wänden 130a, 130b, 130c und mindestens ein Profil, welches das Auflageelement 130d bildet.

In der Fig. 9 sind als Option Durchbrüche 113d im Halteteil 113 eingezeichnet, hier zwei. Es können auch weniger oder mehr sein. Die Durchbrüche 113d sind jeweils durch eine unten offen ausgestaltete Abdeckkappe 113e abgedeckt, so dass ein Eindringen von Wasser erschwert ist (vgl. Fig. 11).

Durch den jeweiligen Durchbruch 113d kann Luft strömen, um etwaige Hitze abzuführen, welche im Innenraum entsteht, der vom Halteteil 113 sowie vom Basis- und Abdeckprofil 130, 140 umschlossen wird. Um diesen Luftstrom zu fördern, sind vorzugsweise im Basisprofil 130, z.B. im Boden 130c, ebenfalls Durchgangsöffnungen 130l vorgesehen (vgl. Fig. 10).

Bei den hier dargestellten Beispielen ist das Oberprofil 20, 120 jeweils durchgehend ausgebildet. Es ist auch denkbar ein anderes Haltemittel zum Halten eines oberen Randbereichs des mindestens einen Solarpanels 1 am Pfosten 10 bzw. 110 vorzusehen. Beispielsweise kann am Pfosten 10 bzw. 110 ein Halteprofil, z.B. ein U-förmiges Profil, befestigt oder befestigbar sein, so dass es beidseitig über den Pfosten 10, 110 hinausragt, um den rechten bzw. linken Teil des oberen Randbereichs eines Solarpanels 1 zu umgreifen. Die oberen Dichtleisten 24, 25 werden entsprechend der Länge des Halteprofils angepasst. Der obere Rand des Solarpanels 1 ist dann in der Mitte freiliegend, während sein linker bzw. rechter oberer Randbereich am Pfosten gehalten ist. Ein Handlauf ist auf den Halteprofilen befestigbar.

Es können noch Eckstücke oder Abschrägungen bei den Profilen 20, 30, 30', 40, 40', 120, 130, 140 vorgesehen sein, um beim Geländer eine Ecke vorzusehen, welche einer Ecke im Balkon B folgt.

Die hier beschriebenen Beispiele erlauben es ein Geländer mit Solarpanels 1 zu bilden, welche sicher gehalten sind, so dass u.a. gesetzlichen Vorschriften Genüge getan ist, welche z.B. verlangen, dass das Geländer einer vorgegebenen maximalen Krafteinwirkung von aussen bzw. von innen widersteht, ohne dass eine zu grosse Lücken entsteht, welche die Absturzsicherung nicht mehr gewährleisten würde. Dies wäre insbesondere dann der Fall, wenn durch diese maximale Krafteinwirkung das Solarpanel 1 herausfiele.

Die Solarpanels 1 werden vorzugsweise beabstandet zueinander angeordnet angebracht, wobei je nach Grösse des Balkons zwischen zwei benachbarten Solarpanels 1 auch mehr als ein Pfosten 10, 110 angeordnet werden kann, um so zu gewährleisten, dass keine sicherheitskritischen Lücken entstehen. Dadurch ist es möglich, das Geländer an die Grösse des Balkons anzupassen, selbst wenn nur wenige Solarpanels 1 mit unterschiedlicher Breite vorgesehen sind.

Als Solarpanel 1 sind hier z.B. bifaziale Module einsetzbar, welche eine Lichteinstrahlung auf die Vorder- sowie Rückseite nutzen können.

## Patentansprüche

1. Bausatz zur Bildung eines Geländers mit Solarpanels (1), welcher umfasst:
mindestens ein Basisprofil (30, 30', 130) als Auflage für mindestens ein Solarpanel,
mindestens einen Pfosten (10, 110) mit einer daran befestigten Halteplatte (13b, 13b', 113b), an welcher das mindestens eine Basisprofil befestigbar ist, und
mindestens ein Haltemittel (20, 120) zum Halten eines oberen Randbereichs des mindestens einen Solarpanels am Pfosten,
**dadurch gekennzeichnet, dass** das mindestens eine Basisprofil (30, 30', 130) als Auflage für die untere Kantenfläche des mindesten einen Solarpanels vorgesehen ist und dass der Bausatz weiter umfasst:
mindestens ein Abdeckprofil (40, 40', 140), welches lösbar mit dem mindestens einen Basisprofil verbindbar ist, so dass das mindestens eine Solarpanel zwischen Abdeck- und Basisprofil angeordnet ist, und
mindestens ein zweites, mit dem mindestens einen Basisprofil lösbar verbindbares Abdeckprofil (40, 40', 140), wobei das mindestens eine Abdeckprofil und das mindestens eine zweite Abdeckprofil so an das Basisprofil (30, 30', 130) anbringbar sind, dass die Halteplatte (13b, 13b', 113) dazwischen angeordnet ist.

2. Bausatz nach Anspruch 1, wobei die Verbindung zwischen Abdeck- (40, 40', 140) und Basisprofil (30, 30', 130) schraubenlos ist und/oder Abdeck- und Basisprofil sind mittels einer Schnappverbindung miteinander verbindbar.

3. Bausatz nach Anspruch 2, wobei das mindestens eine Basisprofil (30, 30', 130) bzw. das mindestens eine Abdeckprofil (40, 40', 140) mindestens eines der folgenden Merkmale A1-A6 aufweist:
A1) eines von Basis- und Abdeckprofil weist eine federnde Leiste (40d) auf und das andere Profil einen hinterschnittenen Bereich (30i, 130i), in welchen die federnde Leiste in Eingriff bringbar ist,
A2) das Abdeckprofil weist eine seitliche Wand (40a) auf, an welcher die federnde Leiste (40d) angeordnet ist, vorzugsweise ist die federnde Leiste vom oberen und unteren Ende der seitlichen Wand beabstandet angeordnet,
A3) das Abdeckprofil weist eine Eingriffsleiste (40c) auf, welche vorzugsweise am unteren Ende der seitlichen Wand (40a) des Abdeckprofils angeordnet ist,
A4) das Basisprofil weist eine Seitenwand (30b, 130b) auf, an welchem der hinterschnittene Bereich (30i, 130i) ausgebildet ist, wobei dieser im Querschnitt gesehen vorzugsweise abgeschrägt (30k) ausgebildet ist,
A5) das Basisprofil weist eine Eingriffsnut (30h, 130h) auf, in welche die Eingriffsleiste (40c) des Abdeckprofils in Eingriff bringbar ist und welche vorzugsweise am unteren Ende der Seitenwand (30b) des Basisprofils angeordnet ist.

4. Bausatz nach einem der Ansprüche 2-3, wobei das mindestens eine Basisprofil (30, 30', 130) und das mindestens eine Abdeckprofil (40, 40', 140'), nachdem sie miteinander verbunden sind, mindestens einen Kanal (30e, 71) umschliessen für die Aufnahme von Leitungen und/oder mindestens eines Leistungsoptimierers (70) für das mindestens eine Solarpanel (1).

5. Bausatz nach einem der vorangehenden Ansprüche, wobei die Halteplatte (13b, 13b'. 113b) mindestens eines der folgenden Merkmale B1-B6 aufweist:
B1) die Halteplatte (13b, 13b') weist mindestens ein Durchgangsloch (13a) auf, durch welches zur Befestigung des mindestens einen Basisprofils (30, 30') das Ende einer Befestigungsschraube (50) hindurchführbar ist,
B2) die Halteplatte (13b, 13b', 113b) ist an einem Längsteil (11, 111) des mindestens einen Pfostens (10, 110) befestigt, vorzugsweise ist sie an einer Schmalseite des Längsteils befestigt, so dass sie seitlich über das Längsteil hinausragt,
B3) die Halteplatte (13b, 13b'. 113b) weist mindestens einen Durchbruch (13d, 113d) auf, durch welchen Luft hindurchströmen kann, vorzugsweise ist der mindestens eine Durchbruch so angeordnet, dass er über dem Bereich liegt, mit welchem das mindestens eine Basisprofil (30, 30', 130) an der Halteplatte befestigbar ist,
B4) die Halteplatte (13b, 13b', 113b) ist Teil eines Halteteils (13, 13', 113) mit einer Deckplatte (13c, 113c), welche quer zur Halteplatte angeordnet ist, vorzugsweise ist die Deckplatte oben an der Halteplatte befestigt und/oder einstückig mit der Halteplatte ausgebildet,
B5) die Halteplatte (13b') ist Teil eines Halteteils (13') mit einer Bodenplatte (13c'), welche quer zur Halteplatte angeordnet ist, vorzugsweise ist die Bodenplatte unten an der Halteplatte befestigt und/oder einstückig mit der Halteplatte ausgebildet,
B6) die Halteplatte (13b, 13b', 113b) ist Teil eines Halteteils (13, 13', 113), an welches beidseitig ein Abdeckprofil (40, 40', 140) bündig anbringbar ist.

6. Bausatz nach einem der vorangehenden Ansprüche, wobei das mindestens eine Basisprofil (30, 30', 130) mindestens eines der folgenden Merkmale C1-C4 aufweist:
C1) das Basisprofil (30, 30', 130) weist eine Auflageleiste (30d) als Auflage für das mindestens eine Solarpanel (1) auf, wobei die Auflageleiste vorzugsweise in das Innere des Basisprofils (30, 30', 130) hineinragt und/oder vom Boden (30c, 130c) des Basisprofils beabstandet angeordnet ist,
C2) das Basisprofil (30, 30') weist eine hintere seitliche Wand (30b) mit einer Befestigungsnut (30g) auf, in welcher der Kopf einer Befestigungsschraube (50) zur Befestigung an der Halteplatte aufnehmbar ist,
C3) das Basisprofil (30, 30', 130) weist eine vordere seitliche Wand (30a', 130a) auf, an dessen Innenseite eine Nut (30g', 130m) angebracht ist, an welcher mindestens ein Leistungsoptimierer (70) für das mindestens eine Solarpanel (1) befestigbar ist,
C4) das Basisprofil (30, 30') weist eine hintere seitliche Wand (30b) auf, welche an der Halteplatte (13b, 13b') befestigbar ist, so dass diese die hintere seitliche Wand überragt.

7. Bausatz nach einem der vorangehenden Ansprüche, wobei das mindestens eine Abdeckprofil (40, 40', 140) mindestens eines der folgenden Merkmale D1-D3 aufweist:
D1) das Abdeckprofil (40, 40', 140) weist ein Deckteil (40b) auf, welches quer zu einer bzw. der seitlichen Wand (40a) des Abdeckprofils angeordnet ist, vorzugsweise ist das Deckteil am oberen Ende der seitlichen Wand befestigt und/oder einstückig mit der seitlichen Wand ausgebildet,
D2) das Abdeckprofil (40', 140) weist ein Bodenteil (40b', 140f) auf, welches quer zu einer bzw. der seitlichen Wand (40a, 40a') des Abdeckprofils angeordnet ist, vorzugsweise ist das Bodenteil am unteren Ende der seitlichen Wand befestigt und/oder einstückig mit der seitlichen Wand ausgebildet,
D3) das Abdeckprofil (40') ist nach Verbinden mit dem mindestens einen Basisprofil (30') am unteren Ende beabstandet zum Basisprofil angeordnet zur Bildung eines Spaltes (72), durch welchen hindurch Luft strömen kann.

8. Bausatz nach einem der vorangehenden Ansprüche, welcher weiter Dichtleisten (24, 25, 34, 35) umfasst, zwischen welchen das mindestens eine Solarpanel (1) im unteren und/oder oberen Bereich anordbar ist, wobei vorzugsweise die Dichtleisten mindestens eines der folgenden Merkmale E1-E4 aufweisen:
E1) mindestens zwei Dichtleisten (24, 25) sind mit dem mindestens einen Haltemittel (20) verbunden,
E2) mindestens eine Dichtleiste (34) ist mit dem mindestens einen Basisprofil (30, 30', 130) verbunden,
E3) mindestens eine Dichtleiste (35) ist mit einem Halteteil (13, 13', 113), welches die Halteplatte (13b, 13b', 113b) umfasst, und/oder mit einem bzw. dem mindestens einen Abdeckprofil (40, 40', 140) verbunden,
E4) die Dichtleisten (24, 25, 34, 35) sind aus einem flexiblen Material, insbesondere einem Elastomer, gefertigt.

9. Bausatz nach einem der vorangehenden Ansprüche, wobei das mindestens eine Haltemittel ein Oberprofil (20, 120) ist, in welches zumindest ein Teil des oberen Randbereichs des mindestens einen Solarpanels (1) aufnehmbar ist und welches am Pfosten (10, 110) befestigt oder befestigbar ist.

10. Bausatz nach Anspruch 9, wobei das Oberprofil (20, 120) mindestens eines der folgenden Merkmale F1-F3 aufweist:
F1) das Oberprofil (20, 120) weist einen Längsschlitz (20a, 120a) auf, durch welchen hindurch zumindest ein Teil des obere Randbereichs des mindestens einen Solarpanels (1) einfügbar ist,
F2) das Oberprofil (20, 120) weist eine Befestigungsnut (20d, 120d) auf, in welcher der Kopf einer Befestigungsschraube (50) zur Befestigung an einem Befestigungsteil (12, 112) des mindestens einen Pfostens (10, 110) aufnehmbar ist,
F3) das Oberprofil (20, 120) weist eine Oberseite (20e) auf, welcher als Handlauf dient oder an welcher ein separater Handlauf befestigt ist.

11. Geländer mit mindestens einem Solarpanel (1), welches mittels eines Bausatzes nach einem der vorangehenden Ansprüche gehalten ist.

12. Geländer nach Anspruch 11, bei welchem die Verkabelung für das mindestens eine Solarpanel (1) in mindestens einem Basisprofil (30, 30', 130) des Bausatzes verläuft.

13. Geländer nach Anspruch 11 oder 12, mit mindestens einem Leistungsoptimierer (70) für das mindestens eine Solarpanel (1), welcher an einem Basisprofil (30, 30', 130) des Bausatzes befestigt ist.

14. Photovoltaikanlage mit einem Geländer nach einem der Ansprüche 11-13.

## Claims

1. Kit for the formation of a railing with solar panels (1), which comprises:
at least one base profile (30, 30', 130) as a support for at least one solar panel,
at least one post (10, 110) with a holding plate (13b, 13b', 113b) attached thereto, to which the at least one base profile can be attached, and
at least one holding means (20, 120) for holding an upper edge portion of the at least one solar panel to the post,
**characterized in that** the at least one base profile (30, 30', 130) is provided as a support for the lower edge surface of the at least one solar panel and
**in that** the kit further comprises:
at least one cover profile (40, 40', 140) which can be detachably connected to the at least one base profile, so that the at least one solar panel is arranged between cover profile and base profile, and
at least one second cover profile (40, 40', 140) which can be detachably connected to the at least one base profile, wherein the at least one cover profile and the at least one second cover profile can be attached to the base profile (30, 30', 130) such that the holding plate (13b, 13b', 113) is arranged therebetween.

2. Kit according to claim 1, wherein the connection between cover profile (40, 40', 140) and base profile (30, 30', 130) is screwless and/or cover profile and base profile can be connected to each other by means of a snap connection.

3. Kit according to claim 2, wherein the at least one base profile (30, 30', 130) and the at least one cover profile (40, 40', 140), respectively, has at least one of the following features A1-A6:
A1) one of the base profile and the cover profile has a resilient strip (40d) and the other profile has an undercut area (30i, 130i) in which the resilient strip can be engaged,
A2) the cover profile has a lateral wall (40a) at which the resilient strip (40d) is arranged, preferably the resilient strip is arranged at a distance from the upper and lower end of the lateral wall,
A3) the cover profile has an engagement strip (40c), which is preferably arranged at the lower end of the lateral wall (40a) of the cover profile,
A4) the base profile has a side wall (30b, 130b) on which the undercut area (30i, 130i) is formed, which is preferably beveled (30k) when viewed in cross-section,
A5) the base profile has an engagement groove (30h, 130h) into which the engagement strip (40c) of the cover profile can be engaged and which is preferably arranged at the lower end of the side wall (30b) of the base profile.

4. Kit according to any one of the claims 2 to 3, wherein the at least one base profile (30, 30', 130) and the at least one cover profile (40, 40', 140), after being connected to each other, enclose at least one channel (30e, 71) for receiving conduits and/or at least one power optimizer (70) for the at least one solar panel (1).

5. Kit according to any one of the preceding claims, wherein the holding plate (13b, 13b'. 113b) has at least one of the following features B1-B6:
B1) the holding plate (13b, 13b') has at least one through hole (13a), through which the end of an attachment screw (50) can be passed for attaching the at least one base profile (30, 30'),
B2) the holding plate (13b, 13b', 113b) is attached to a longitudinal part (11, 111) of the at least one post (10, 110), preferably it is attached to a narrow side of the longitudinal part so that it projects laterally beyond the longitudinal part,
B3) the holding plate (13b, 13b'. 113b) has at least one aperture (13d, 113d) through which air can flow, preferably the at least one aperture is arranged in such a way that it lies above the area with which the at least one base profile (30, 30', 130) can be attached to the holding plate,
B4) the holding plate (13b, 13b', 113b) is part of a holding part (13, 13', 113) having a cover plate (13c, 113c) which is arranged transversely to the holding plate, preferably the cover plate is attached to the top of the holding plate and/or is designed in one piece with the holding plate,
B5) the holding plate (13b') is part of a holding part (13') having a bottom plate (13c') which is arranged transversely to the holding plate, preferably the bottom plate is attached to the bottom of the holding plate and/or is designed in one piece with the holding plate,
B6) the holding plate (13b, 13b', 113b) is part of a holding part (13, 13', 113) to which a cover profile (40, 40', 140) can be attached flush on both sides.

6. Kit according to any one of the preceding claims, wherein the at least one base profile (30, 30', 130) has at least one of the following features C1-C4:
C1) the base profile (30, 30', 130) has a support strip (30d) as a support for the at least one solar panel (1), wherein the support strip preferably projects into the interior of the base profile (30, 30', 130) and/or is arranged at a distance from the bottom (30c, 130c) of the base profile,
C2) the base profile (30, 30') has a rear lateral wall (30b) with an attachment groove (30g) in which the head of an attachment screw (50) can be received for attaching to the holding plate,
C3) the base profile (30, 30', 130) has a front lateral wall (30a', 130a), on the inside of which a groove (30g', 130m) is arranged, to which at least one power optimizer (70) for the at least one solar panel (1) can be attached,
C4) the base profile (30, 30') has a rear lateral wall (30b), which can be attached to the holding plate (13b, 13b') so that it projects beyond the rear side wall.

7. Kit according to any one of the preceding claims, wherein the at least one cover profile (40, 40', 140) has at least one of the following features D1-D3:
D1) the cover profile (40, 40', 140) has a cover part (40b) which is arranged transversely to a or the lateral wall (40a) of the cover profile, preferably the cover part is attached to the upper end of the lateral wall and/or is designed in one piece with the lateral wall,
D2) the cover profile (40', 140) has a bottom part (40b', 140f), which is arranged transversely to a or the lateral wall (40a, 40a') of the cover profile, preferably the bottom part is attached to the lower end of the lateral wall and/or is designed in one piece with the lateral wall,
D3) the cover profile (40'), after connecting to the at least one base profile (30'), is arranged at the lower end at a distance from the base profile to form a gap (72) through which air can flow.

8. Kit according to any one of the preceding claims, further comprising sealing strips (24, 25, 34, 35) between which the at least one solar panel (1) can be arranged in the lower and/or upper area, wherein the sealing strips preferably have at least one of the following features E1-E4:
E1) at least two sealing strips (24, 25) are connected to the at least one holding means (20),
E2) at least one sealing strip (34) is connected to the at least one base profile (30, 30', 130),
E3) at least one sealing strip (35) is connected to a holding part (13, 13', 113), which comprises the holding plate (13b, 13b', 113b), and/or to a or the at least one cover profile (40, 40', 140),
E4) the sealing strips (24, 25, 34, 35) are made of a flexible material, in particular an elastomer.

9. Kit according to any one of the preceding claims, wherein the at least one holding means is an upper profile (20, 120) into which at least a part of the upper edge portion of the at least one solar panel (1) can be received, and which is attached or can be attached to the post (10, 110).

10. Kit according to claim 9, wherein the upper profile (20, 120) has at least one of the following features F1-F3:
F1) the upper profile (20, 120) has a longitudinal slot (20a, 120a) through which at least a part of the upper edge portion of the at least one solar panel (1) can be inserted,
F2) the upper profile (20, 120) has an attachment groove (20d, 120d) in which the head of an attachment screw (50) for attaching to an attachment part (12, 112) of the at least one post (10, 110) can be received,
F3) the upper profile (20, 120) has an upper side (20e) which serves as a handrail or to which a separate handrail is attached.

11. Railing having at least one solar panel (1) which is supported by means of a kit according to any one of the preceding claims.

12. Railing according to claim 11, wherein the wiring for the at least one solar panel (1) runs in at least one base profile (30, 30', 130) of the kit.

13. Railing according to claim 11 or 12, with at least one power optimizer (70) for the at least one solar panel (1), which is attached to a base profile (30, 30', 130) of the kit.

14. Photovoltaic system having a railing according to any one of the claims 11-13.

## Revendications

1. Kit pour la construction d'un parapet avec des panneaux solaires (1), qui comprend :
au moins un profilé de base (30, 30', 130) servant d'appui pour au moins un panneau solaire,
au moins un poteau (10, 110) avec une plaque de maintien (13b, 13b', 113b) montée sur celui-ci, à laquelle l'au moins un profilé de base peut être fixé et
au moins un moyen de maintien (20, 120) pour le maintien d'une zone de bord supérieure de l'au moins un panneau solaire sur le poteau,
**caractérisé en ce que** l'au moins un profilé de base (30, 30', 130) est conçu comme un appui pour la surface du bord inférieur de l'au moins un panneau solaire et **en ce que** le kit comprend en outre :
au moins un profilé de recouvrement (40, 40', 140) qui peut être relié de manière amovible avec l'au moins un profilé de base, de sorte que l'au moins un panneau solaire est disposé entre les profilés de recouvrement et de base, et
au moins un deuxième profilé de recouvrement (40, 40', 140) pouvant être relié de manière amovible avec l'au moins un profilé de base, l'au moins un profilé de recouvrement et l'au moins un deuxième profilé de recouvrement pouvant être montés sur le profilé de base (30, 30', 130) de telle sorte que la plaque de maintien (13b, 13b', 113b) est disposée entre eux.

2. Kit selon la revendication 1, dans lequel la liaison entre le profilé de recouvrement (40, 40', 140) et le profilé de base (30, 30', 130) est sans vis et/ou les profilés de recouvrement et de base peuvent être reliés entre eux au moyen d'une liaison par encliquetage.

3. Kit selon la revendication 2, dans lequel l'au moins un profilé de base (30, 30', 130) ou l'au moins un profilé de recouvrement (40, 40', 140) présente au moins une des caractéristiques A1 - A6 suivantes :
A1) un parmi les profilés de base et de recouvrement comprend une baguette élastique (40b) et l'autre profilé présente une zone à contre-dépouille (30i, 130i) dans laquelle la baguette élastique peut être emboîtée,
A2) le profilé de recouvrement comprend une paroi latérale (40a) sur laquelle la baguette élastique (40d) est disposée, de préférence la baguette élastique est disposée de manière distante par rapport aux extrémités supérieure et inférieure de la paroi latérale,
A3) le profilé de recouvrement comprend une baguette d'emboîtement (40c) qui est disposée, de préférence, au niveau de l'extrémité inférieure de la paroi latérale (40a) du profilé de recouvrement,
A4) le profilé de base comprend une paroi latérale (30b, 130b) sur laquelle la zone à contre-dépouille (30i, 130i) est réalisée, celle-ci étant réalisée, vue en coupe transversale, de préférence de manière chanfreinée (30k),
A5) le profilé de base comprend une rainure d'emboîtement (30h, 130h) dans laquelle la baguette d'emboîtement (40c) du profilé de recouvrement peut être emboîtée et qui est disposée, de préférence, au niveau de l'extrémité inférieure de la paroi latérale (30b) du profilé de base.

4. Kit selon l'une des revendications 2 - 3, dans lequel l'au moins un profilé de base (30, 30', 130) et l'au moins un profilé de recouvrement (40, 40', 140), une fois reliés entre eux, forment au moins un canal (30e, 71) pour le logement de conduites et/ou d'au moins un optimiseur de puissance (70) pour l'au moins un panneau solaire (1).

5. Kit selon l'une des revendications précédentes, dans lequel la plaque de maintien (13b, 13b', 113b) présente au moins une des caractéristiques B1 - B6 suivantes :
B1) la plaque de maintien (13b, 13b') comprend au moins un trou de passage (13a), à travers lequel, pour la fixation de l'au moins un profilé de base (30, 30'), l'extrémité d'une vis de fixation (50) peut être passée,
B2) la plaque de maintien (13b, 13b', 113b) est fixée à une partie longitudinale (11, 111) de l'au moins un poteau (10, 110), de préférence elle est fixée à un côté étroit de la partie longitudinale, de sorte qu'elle dépasse latéralement de la partie longitudinale,
B3) la plaque de maintien (13b, 13b', 113b) comprend au moins une percée (13d, 113d) à travers laquelle de l'air peut passe, de préférence d'au moins une percée est disposée de sorte qu'il se trouve au-dessus de la zone avec laquelle l'au moins un profilé de base (30, 30', 130) peut être fixé à la plaque de maintien,
B4) la plaque de maintien (13b, 13b', 113b) fait partie d'une pièce de maintien (13, 13', 113) avec une plaque de recouvrement (13c, 113c) qui est disposée transversalement par rapport à la plaque de maintien, de préférence la plaque de recouvrement est fixée en haut sur la plaque de maintien et/ou est réalisée d'une seule pièce avec la plaque de maintien,
B5) la plaque de maintien (13b') fait partie d'une pièce de maintien (13') avec une plaque de fond (13c'), qui est disposée transversalement par rapport à la plaque de maintien, de préférence la plaque de fond est fixée en bas sur la plaque de maintien et/ou est réalisée d'une seule pièce avec la plaque de maintien,
B6) la plaque de maintien (13b, 13b', 113b) fait partie d'une pièce de maintien (13, 13', 113) sur laquelle un profilé de recouvrement (40, 40', 140) peut être monté en affleurement des deux côtés.

6. Kit selon l'une des revendications précédentes, dans lequel l'au moins un profilé de base (30, 30', 130) présente au moins une des caractéristiques C1 - C4 suivantes :
C1) le profilé de base (30, 30', 130) comprend une baguette d'appui (30d) en tant qu'appui pour l'au moins un panneau solaire (1), de préférence la baguette d'appui dépasse à l'intérieur du profilé de base (30, 30', 130) et/ou est disposée à distance du fond (30c, 130c) du profilé de base,
C2) le profilé de base (30, 30') comprend une paroi latérale arrière (30b) avec une rainure de fixation (30g) dans laquelle la tête d'une vis de fixation (50) peut être logée pour la fixation à la plaque de maintien,
C3) le profilé de base (30, 30', 130) comprend une paroi latérale avant (30a', 130a) sur le côté interne de laquelle est réalisée une rainure (30g', 130m) à laquelle au moins un optimiseur de puissance (70) pour l'au moins un panneau solaire (1) peut être fixé,
C4) le profilé de base (30, 30') comprend une paroi latérale arrière (30b) qui peut être fixée à la plaque de maintien (13b, 13b') de sorte que celle-ci dépasse la paroi latérale arrière.

7. Kit selon l'une des revendications précédentes, dans lequel l'au moins un profilé de recouvrement (40, 40', 140) présente au moins une des caractéristiques D1 - D3 suivantes :
D1) le profilé de recouvrement (40, 40', 140) comprend une partie de recouvrement (40b) qui est disposé transversalement par rapport à une ou à la paroi latérale (40a) du profilé de recouvrement, de préférence la partie de recouvrement est fixée à l'extrémité supérieure de la paroi latérale et/ou est réalisée d'une seule pièce avec la paroi latérale,
D2) le profilé de recouvrement (40', 140) comprend une partie de fond (40b', 140f) qui est disposé transversalement par rapport à une ou la paroi latérale (40a, 40a') du profilé de recouvrement, de préférence la partie de fond est fixée à l'extrémité inférieure de la paroi latérale et/ou est réalisée d'une seule pièce avec la paroi latérale,
D3) le profilé de recouvrement (40') est disposée, après la liaison avec l'au moins un profilé de base (30'), à l'extrémité inférieure, de manière distante par rapport au profilé de base, afin de former un interstice (72) à travers lequel de l'air peut s'écouler.

8. Kit selon l'une des revendications précédentes, qui comprend en outre des baguettes d'étanchéité (24, 25, 34, 35) entre lesquelles l'au moins un panneau solaire (1) peut être disposé dans la partie inférieure et/ou supérieure, de préférence les baguettes d'étanchéité présentent au moins une des caractéristiques E1 - E4 suivantes :
E1) au moins deux baguettes d'étanchéité (24, 25) sont reliées avec l'au moins un moyen de maintien (20),
E2) au moins une baguette d'étanchéité (34) est reliée avec l'au moins un profilé de base (30, 30', 130),
E3) au moins une baguette d'étanchéité (35) est reliée avec une partie de maintien (13, 13', 113), qui comprend la plaque de maintien (13b, 13b', 113b), et/ou avec un ou l'au moins un profilé de recouvrement (40, 40', 140),
E4) les baguettes d'étanchéité (24, 25, 34, 35) sont constituées d'un matériau flexible, plus particulièrement d'un élastomère.

9. Kit selon l'une des revendications précédentes, dans lequel l'au moins un moyen de maintien est un profilé supérieur (20, 120) dans lequel au moins une partie de la zone de bord supérieure de l'au moins un panneau solaire (1) peut être logée et qui est fixée ou peut être fixée au poteau (10, 110).

10. Kit selon la revendication 9, dans lequel le profilé supérieur (20, 120) présente au moins une des caractéristiques F1 - F3 suivantes :
F1) le profilé supérieur (20, 120) comprend une fente longitudinale (20a, 120a) à travers laquelle au moins une partie de la zone de bord supérieure de l'au moins un panneau solaire (1) peut être insérée,
F2) le profilé supérieur (20, 120) comprend une rainure de fixation (20d, 120d) dans laquelle la tête d'une vis de fixation (50) peut être logée pour la fixation à une partie de fixation (12, 112) de l'au moins un poteau (10, 110),
F3) le profilé supérieur (20, 120) comprend un côté supérieur (20e) qui sert de main courante ou sur lequel est fixé une main courant séparée.

11. Parapet avec au moins un panneau solaire (1), qui est maintenu au moyen d'un kit selon l'une des revendications précédentes.

12. Parapet selon la revendication 11, dans lequel le câblage pour l'au moins un panneau solaire (1) s'étend dans au moins un profilé de base (30, 30', 130) du kit.

13. Parapet selon la revendication 11 ou 12, avec au moins un optimiseur de puissance (70) pour l'au moins un panneau solaire (1), qui est fixé à un profilé de base (30, 30', 130) du kit.

14. Installation photovoltaïque avec un parapet selon l'une des revendications 11 - 13.
